# EUROPEAN PATENT APPLICATION

(11) **EP 1 731 212 A1**
(43) Date of publication of application: **13.12.2006**
(21) Application number: 05727449.0
(22) Date of filing: 29.03.2005
(51) Int. Cl.: B01D 53/38, B01D 53/18, B01D 53/58, B01D 53/78, B01D 53/83, B01D 53/06, F24F 3/16

(54) **GAS PURIFIER**

(30) Priority: 31.03.2004 JP 2004103128; 18.11.2004 JP 2004334905
(71) Applicant: DAIKIN INDUSTRIES, LTD., Kita-ku, Osaka 530-8323 (JP)
(72) Inventor: TETSUYA, Katsuhiro; c/o DAIKIN INDUSTRIES, LTD., Sakai-shi, Osaka; 5918511 (JP); OHNO, Masao; c/o DAIKIN INDUSTRIES, LTD. Sakai, Sakai-shi, Osaka; 5918511 (JP); SAHARA, Yoshio; c/o DAIKIN INDUSTRIES, LTD., Sakai-s hi, Osaka; 5918511 (JP)
(74) Representative: Goddar, Heinz J.
(86) International application number: PCT/JP2005/005860
(87) International publication number: WO 2005/094971

(57) **Abstract**

A gas purifier Z includes an air passage Q. An adsorption elimination device B, which includes a regenerable adsorbent 9 for adsorbing chemical contaminants from non-purified air W' and separating the adsorbed contaminants through a regeneration process, and a gas purification unit A, which performs gas-liquid contact with a porous film to separate and eliminate contaminants from the non-purified air W' into a liquid, are arranged in an air passage Q. The chemical contaminants are adsorbed and eliminated by the adsorption elimination device B.

## Description

### TECHNICAL FIELD

The present invention relates to a gas purifier, and more particularly, to a gas purifier for generating purified air supplied to a clean room.

### BACKGROUND ART

A substrate, such as an LCD substrate or a semiconductor wafer, undergoes liquid processing or heat processing in purified air. Thus, the air in a clean room is purified by a gas purifier and then returned to the clean room.

A typical gas purifier includes a chemical filter for adsorbing contaminants such as ammonia components. However, contaminants accumulate in the chemical filter over time. This lowers the contaminant elimination capability of the chemical filter. Thus, the chemical filter generally has a short life. This results in the necessity of replacement of chemical filters in the gas purifier and increases the running cost. There is a further problem in which the entire system must be stopped during the replacement of chemical filters.

To solve the above problems, Japanese Laid-Open Patent Publication No. 2001-230196 discloses a gas purifier capable of continuous use performing gas-liquid contact through a porous film so that water-soluble contaminants are eliminated from the gas and separated into a liquid (e.g., pure water). The gas-liquid contact type purifier enables continuous use but cannot eliminate organic contaminants that are not water-soluble. Further, with this device, pure water is vaporized through the porous film thereby increasing the humidity.

Japanese Laid-Open Patent Publication No. 2002-93688 discloses a gas purifier using a honeycomb rotor formed from a hydrophobic zeolite. This gas purifier efficiently eliminates chemical substances but requires purified gas having a high temperature (e.g., 150° or higher) for regeneration of the adsorbent. Thus, the gas purifier requires more than necessary energy and is disadvantages in economic viewpoints.

### DISCLOSURE OF THE INVENTION

### PROBLEMS THAT ARE TO BE SOLVED BY THE INVENTION

It is an object of the present invention to provide a gas purifier that saves energy and improves the contaminant elimination efficiency.

### MEANS FOR SOLVING THE PROBLEMS

To achieve the above object, a gas purifier of the present invention purifies gas including contaminants. The gas purifier is characterized by an adsorption elimination device, which includes a regenerable adsorbent for adsorbing contaminants from non-purified air and separates the adsorbed contaminants through a regeneration process, and a gas purification unit, which performs gas-liquid contact with a porous film to separate and eliminate contaminants from the non-purified air into a liquid, are arranged in an air passage.

In such a structure, the gas purification unit performs gas-liquid contact with a porous film to separate and eliminate contaminants from the non-purified air into a liquid, and the adsorption elimination device adsorbs organic contaminants in the air to generate purified air. Accordingly, water-soluble contaminants are separated and eliminated by the gas purification unit and organic contaminants are adsorbed and eliminated in the adsorption elimination device. This significantly improves the air purifying efficiency. Further, the gas purification unit and the adsorption elimination device are both capable of continuous use. Thus, replacements become unnecessary, and the operation efficiency is improved.

Further, the gas purification unit may be arranged upstream to the adsorption elimination device and in series with the adsorption elimination device. In such a structure, the gas purification unit performs gas-liquid contact with a porous film to separate and eliminate contaminants from the non-purified air into a liquid. Then, the adsorption elimination device adsorbs contaminants from the air that passed through the gas purification unit with the adsorbent and generates purified air. Accordingly, water-soluble contaminants are separated and eliminated by the gas purification unit, and contaminants passing through the gas purification unit are adsorbed and eliminated by the adsorption elimination device. This significantly improves the air purifying efficiency and drastically reduces the adsorption amount of contaminants in the adsorption elimination device B. Thus, energy required for regeneration is saved. Further, the gas purification unit and the adsorption elimination device are both capable of continuous use. Thus, replacements become unnecessary, and the operation efficiency is improved.

The gas purification unit may also be arranged downstream to the adsorption elimination device and in series with the adsorption elimination device. With such a structure, when the non-purified air passes through the adsorption elimination device, organic contaminants in the air are adsorbed by the adsorbent. Then, the gas purification unit performs gas-liquid contact with a porous film to separate and eliminate contaminants into a liquid from the air that passed through the adsorption elimination device. Accordingly, organic contaminants are adsorbed and eliminated by the adsorption elimination device, and the water-soluble contaminants passing through the adsorption elimination device are separated and eliminated by the gas purification unit. This significantly improves the air purifying efficiency. Further, the gas purification unit and the adsorption elimination device are both capable of continuous use. Thus, replacements become unnecessary, and the operation efficiency is improved. Additionally, since polar organic contaminants are especially eliminated with high efficiency, the humidification function of the gas purification unit does not affect the elimination efficiency of the adsorption elimination device.

### BRIEF DESCRIPTION OF THE DRAWINGS

Fig. 1 is a cross-sectional view schematically showing the structure of a gas purifier according to a first embodiment of the present invention;
Fig. 2 is a perspective view showing the gas purifier according to the first embodiment of the present invention and the cross-section of part of a gas purification unit;
Fig. 3 is a schematic diagram showing the gas purification unit of the gas purifier according to the first embodiment of the present invention;
Fig. 4 is a cross-sectional view showing another example of a gas purification unit in the gas purifier according to the first embodiment of the present invention;
Fig. 5 is a diagram showing an adsorption elimination device in the gas purifier according to the first embodiment of the present invention;
Fig. 6 is a cross-sectional view schematically showing the structure of a gas purifier according to a second embodiment of the present invention;
Fig. 7 is a cross-sectional view schematically showing the structure of a gas purifier according to a third embodiment of the present invention;
Fig. 8 is a diagram schematically showing the structure of a gas purifier according to a fourth embodiment of the present invention;
Fig. 9 is a flowchart showing the contents of discharge water control for a gas purification unit in the gas purifier according to the fourth embodiment of the present invention;
Fig. 10 is a flowchart showing the contents of discharge gas control for an adsorption elimination device in the gas purifier according to the fourth embodiment of the present invention;
Fig. 11 is a front view schematically showing the structure of a honeycomb rotor forming the adsorption elimination device in the gas purifier according to the fourth embodiment of the present invention;
Fig. 12 is a characteristic diagram showing one aspect of temperature-humidity control in the gas purifier according to the fourth embodiment of the present invention;
Fig. 13 is a cross-sectional view schematically showing the structure of a gas purifier according to a fifth embodiment of the present invention;
Fig. 14 is a perspective view showing the gas purifier according to the fifth embodiment of the present invention and the cross-section of part of a gas purification unit;
Fig. 15 is a cross-sectional view showing another example of a gas purification unit in the gas purifier according to the fifth embodiment of the present invention;
Fig. 16 is a cross-sectional view schematically showing the structure of a gas purifier according to a sixth embodiment of the present invention;
Fig. 17 is a cross-sectional view schematically showing the structure of a gas purifier according to a seventh embodiment of the present invention; and
Fig. 18 is a cross-sectional view schematically showing the structure of a gas purifier according to an eighth embodiment of the present invention.

### BEST MODE FOR CARRYING OUT THE INVENTION

First to eighth embodiments of the present invention will now be discussed with reference to the drawings. Only points differing from the first embodiment will be described in the second to eighth embodiments. Identical or corresponding parts will be denoted by the same reference character and will not be described.

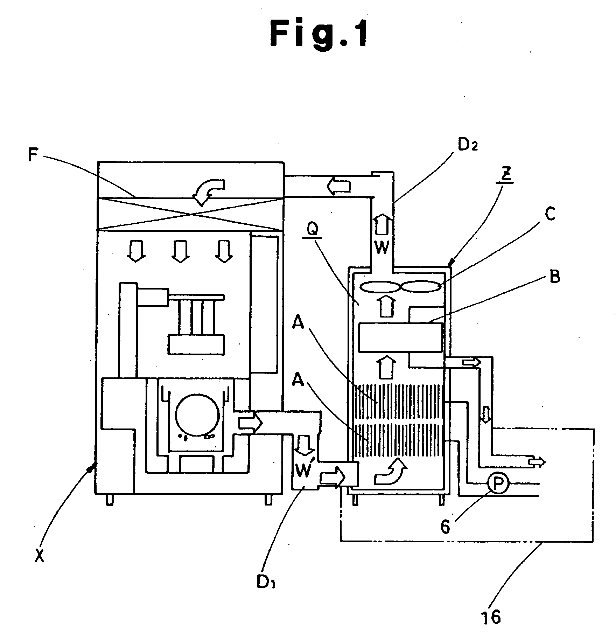

The first embodiment will now be discussed with reference to Figs. 1 to 5.

As shown in Fig. 1, a gas purifier Z is added to a cleaning device X for semiconductor wafers. Non-purified air W', which is discharged from the cleaning device X via a duct D₁ is purified into regenerated air W by the gas purifier Z. The regenerated air W is then returned to the cleaning device X via a duct D₂. Reference character F denotes a fan filter unit including a high performance filter arranged in a ceiling portion, which functions as an air supplying portion extending to the cleaning device X.

An air passage Q extends between the duct D₁ and the duct D₂ in the gas purifier Z. An adsorption elimination device B and a gas purification unit A are arranged in the air passage Q. The adsorption elimination device B adsorbs the contaminants in the non-purified air W' and includes a regenerable adsorbent 9, which undergoes a regeneration process for separating the adsorbed contaminants. The gas purification unit A, which is arranged in front of and in series with the adsorption elimination device B, causes gas-liquid contact with a porous film so that contaminants are eliminated from the non-purified gas W' and separated into a liquid. The preferred embodiment is formed so that air entirely passes through the purification unit A and the elimination device B. Reference character C denotes a fan for forcibly moving the purified air W.

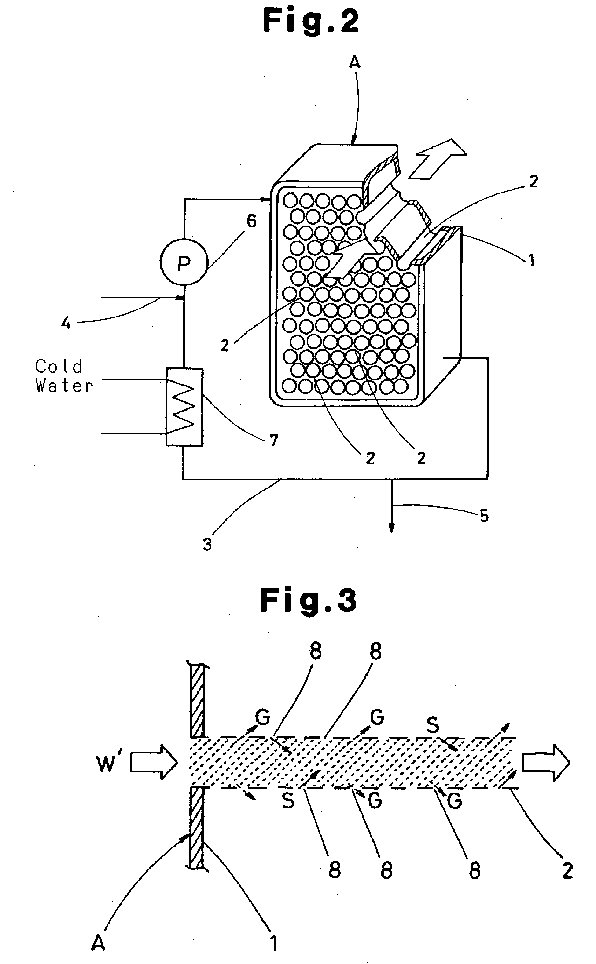

As shown in Fig. 2, the purification unit A includes a tank 1 containing pure water with a plurality of pipes 2 extending through the tank 1. The pipes 2 are formed from porous films (e.g., PTEF porous film). The non-purified air W' is supplied into the pipes 2. In the preferred embodiment, the pipes 2 extend vertically and are arranged in two stages in the purification unit A.

A passage 3 for circulation of pure water, a water supplying passage 4 for supplying new pure water to the circulation passage 3, and a water discharging passage 5 for discharging used pure water from the circulation passage 3 are connected to the tank 1. Reference character 6 denotes a pure water circulation pump. A heat exchanger 7, which functions as a mechanism for controlling the temperature of the pure water, is arranged in the circulation passage 3. The amount of cold water supplied to the heat exchanger 7 is controlled to control the temperature of the pure water. As a result, the temperature and humidity of the air passing through the gas purification unit A is adjusted.

As shown in Fig. 3, in the purification unit A, fine holes 8 in the pipes 2 enable water-soluble gas (such as ammonia) G to flow out and water vapor S. However, the fine holes 8 hinder the passage of water droplets. Accordingly, water-soluble gas G, which is a contaminant, is separated and eliminated from the non-purified gas W' to obtain the purified air W. The purified air W is humidified by the water vapor drawn through the fine holes 8.

The tank 1 containing pure water and the pipes extending through the tank and formed from porous films are arranged in multiple stages so that the purification unit A is formed to be compact. Thus, the purification unit A efficiently purifies air with a low pressure loss.

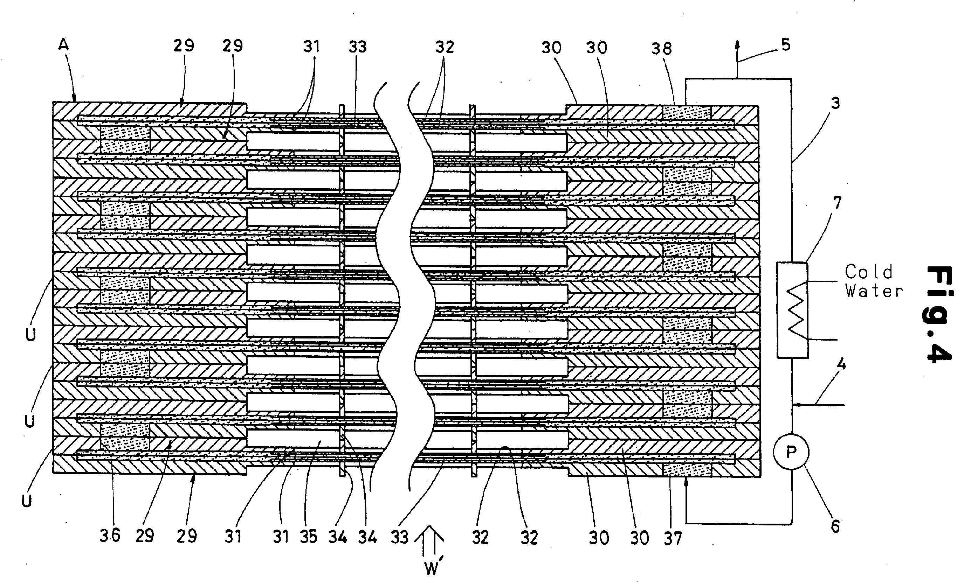

Fig. 4 shows another example of the purification unit A. This purification unit A is formed by stacking a plurality of film elements 29, which are formed from porous films (e.g., PTEF porous films). Gas-liquid contact occurs between the pure water and the non-purified air W' through the film elements 29. Each film element 29 is formed by extending a planar porous film 32 in an opening 31 of a thin and rectangular support frame 30, which is integrally formed from a resin material. A pair of vertically stacked film elements 29 form a film unit U. A pure water passage 33 and an air passage, through which the non-purified air W' flows in a direction perpendicular to the porous films 32, are formed between the film elements 29 in each film unit U. The porous films 32 between adjacent film units U are spaced by a spacer 34 so as to form a gap 35. Reference character 36 denotes a circulation port for the pure water, 37 denotes an inlet for the pure water, and 38 denotes an outlet for the pure water.

In the purification unit A, the pure water entering from the lower inlet 37 flows upward through the pure water passage 33 in a zigzagged manner and is discharged from the upper outlet 38. During this flow stage, gas-liquid contact occurs through the film elements 29 between the pure water and the non-purified air W', which flows through the air passage, so that the contaminants in the non-purified are separated and eliminated into the pure water. (This changes the concentration distribution in the pure water and causes the pure water to flow in a zigzagged manner in the passage 33.) Accordingly, the length of the passage 33 is increased. Thus, as the pure water flows, turbulence gradually increases in the flow. As a result, the amount of water flowing through the central portion of the pure water passage 33 decreases. This increases the amount of water flowing near the porous films 32, which form the peripheral portion of the passage 33.

As a result, under the assumption that the circulation water amount per unit flow amount is the same, the area of the porous film 32 that contacts the pure water increases. This enhances the effect for dissolving the contaminants of the non-purified air W' into pure water and improves the contaminant elimination efficiency of the purification unit A. Thus, the purification unit A is compact and has a high working efficiency.

In the same manner as in Fig. 2, a circulation passage 3 for the pure water, a water supplying passage 4 and water discharging passage 5 connected to the circulation passage 3, a pure water circulation pump 6, and a heat exchanger 7 are connected to this purification unit A.

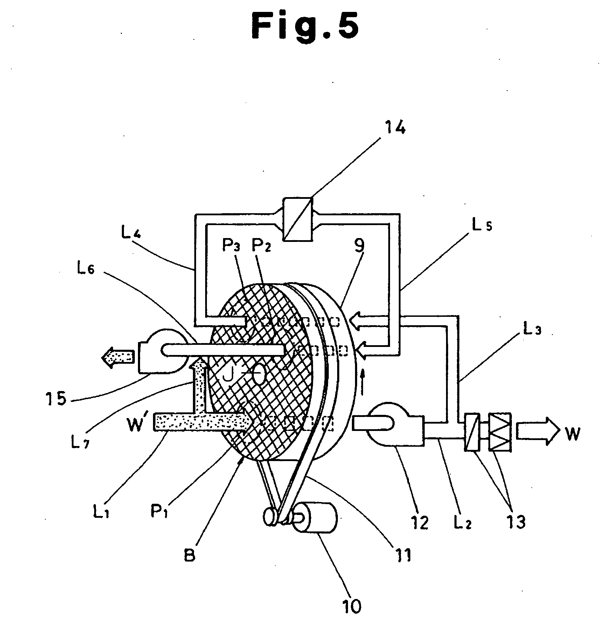

As shown in Fig. 5, the adsorbent in the adsorbent elimination device B includes a honeycomb rotor 9, which is formed from a substance (e.g., hydrophobic zeolite) having a porous structure enabling the circulation of gas. The honeycomb rotor 9, which rotates about axis J, has a peripheral surface connected to an output shaft of a motor 10 by a belt 11.

In correspondence with the circulation of the purified air W and non-purified air W' in the elimination device B, a purification position P₁ for purifying the non-purified air W', a regeneration position P₂ for separating the adsorbed contaminants from the honeycomb rotor 9, and a cooling position P₃ for cooling the honeycomb rotor 9 are predetermined. In the honeycomb rotor 9, the axis J is located at the center of the three positions P₁, P₂, and P₃. Continuous rotation of the honeycomb rotor 9 at a low speed causes the honeycomb rotor 9 to sequentially pass by the positions P₁, P₂, and P₃.

The honeycomb rotor 9 is manufactured by adding hydrophobic zeolite to a water resistant and vapor resistant material such as ceramic paper through water-soluble dispersion impregnation and then performing heating and drying. This process forms a honeycomb shape in which a plurality of parallel ventilation holes extend from the wall surface in the axial direction. The main component is hydrophobic zeolite in the inner wall surface of the ventilation holes of the honeycomb rotor 9, and the hydrophobic zeolite effectively contacts the flow of gas circulating through the ventilation holes. Zeolite has a superior adsorbing capability with respect to ammonia. The honeycomb rotor 9 may be formed by stacking two or more adsorbents in multiple stages in the air flow direction.

A flow passage L₁ for the non-purified air W' sent from the cleaning device X through the duct D₁ (Fig. 1) opens toward the purification position P₁. An extraction passage L₂ opens toward the flow passage L₁ at the opposite side of the honeycomb rotor 9. A processing fan 12 in the extraction passage L₂ adds force to the air passing through the honeycomb rotor 9 and sent downstream so that filters 13 roughly eliminate dust from the air. The purified air W obtained through the filters 13 is sent to the cleaning device X (refer to Fig. 1) via the duct D₂. Further, some of the air that passes through the honeycomb rotor 9 is guided as cooling air to the cooling position P₃ through a guiding passage L₃, which is branched from between the processing fan 12 and the filters 13.

A flow passage L₄ opens on the opposite side of the honeycomb rotor 9 at a position facing towards the opening of the guide passage L₃ to guide the air exiting the cooling position P₃ toward the regeneration position P₂. The air sent from the guide passage L₃ via the honeycomb rotor 9 is sent to a heater 14 through the flow passage L₄. The air heated by the heater 14 is sent to the regeneration position P₂ via a flow passage L₅.

A flow passage L₆, which opens on the opposite side of the honeycomb rotor 9 at a position facing towards the opening of the flow passage L₅, includes an air discharging fan 15. Some of the non-purified air W' flowing through the flow passage L₁ is sent to the flow passage L₆ through a branched flow passage L₇ so that the discharging of air is performed smoothly. The heated air that passes through the honeycomb rotor 9 at the regeneration position P₂ is normally discharged outside. However, as shown by hypothetical lines in Fig. 1, a passage 16 for returning some or all of the regenerated discharged air to the air supplying portion of the gas purifier A may be provided. In such a structure, expensive high-quality air (i.e., purified air) is not discharged. This saves energy.

The present embodiment has the advantages described below.

In the present embodiment, the adsorption elimination device B and the gas purification unit A are arranged in the air passage Q through which air circulates. The adsorption elimination device B includes an adsorbent 9, which adsorbs contaminants from the non-purified air W' and which is regenerated through regeneration that separates the adsorbed contaminants. The purification unit A performs gas-liquid contact through the porous films to separate and eliminate contaminants from the non-purified air W' into a liquid.

Accordingly, in the gas purification unit A, contaminants in the non-purified air W' undergo gas-liquid contact through the porous films to be separated and eliminated into a liquid. In the adsorption elimination device B, organic contaminants in the air are adsorbed by the adsorbent 9 to produce the purified air W. Thus, water-soluble contaminants are separated and eliminated by the gas purification unit A, and organic contaminants are adsorbed and eliminated by the adsorption elimination device B. This significantly improves the air purification efficiency. Further, the gas purification unit A and the adsorption elimination device B may both be continuously used. Thus, replacements are unnecessary and the operation efficiency of the purification unit A increases.

In the preferred embodiment, the purification unit A is arranged at the upstream side of the adsorption elimination device B and in series with the device B. Thus, the contaminants in the non-purified air W' sent from the cleaning device X through the duct D₁ is separated and eliminated into pure water through the pipes 2, which are formed from porous films in the purification unit A. Afterwards, the chemical contaminants in the air are adsorbed by the honeycomb rotor 9 in the elimination device B to produce purified air W, which is sent to the cleaning device X. Accordingly, in addition to the above advantages, the adsorption amount of the contaminants in the elimination device B is drastically reduced. This decreases the energy required for regeneration.

In the elimination device B, the adsorbent 9 is moved to the position P₁ for purifying the non-purified air W' and the position P₂ for separating the adsorbed contaminants. At position P₂, contaminants are separated from the position P₂. Accordingly, the adsorption of contaminants by the adsorbent 9 and the separation of contaminants from the adsorbent 9 are smoothly performed by the movement of the adsorbent 9. This improves the operation efficiency. In the present embodiment, the adsorbent includes the honeycomb rotor 9, which is formed from hydrophobic zeolite, and the motor 10 rotates and moves the honeycomb rotor 9.

Further, some of the purified air W that has passed through the adsorbent 9 is used as regeneration air for the adsorbent 9, and some or all of the regenerated discharged air obtained through the regeneration is returned to the air supplying portion of the gas purification unit A through the passage 16. Thus, expensive and high-quality purified air is not discharged and energy is further saved.

The purification unit A includes the tank 1, which contains pure water, and the plurality of pipes 2, which extend through the tank 1 and are formed from porous films. Accordingly, a multiple stage arrangement makes the purification unit A compact and enables efficient air purification with low pressure loss.

Further, the purification unit (A) is formed by stacking the film elements 29 of porous films, and the film elements 29 cause contact between the pure water and the non-purified air W. Accordingly, the gas-liquid contact through the stacked film elements 29 separate and eliminate the contaminants from the non-purified air W' into the pure water. This obtains a gas purification unit A, which is compact and highly efficient.

Further, a temperature control mechanism 7 controls the temperature of the pure water. This enables adjustment of the temperature and humidity of the air that passes through the gas purification unit A.

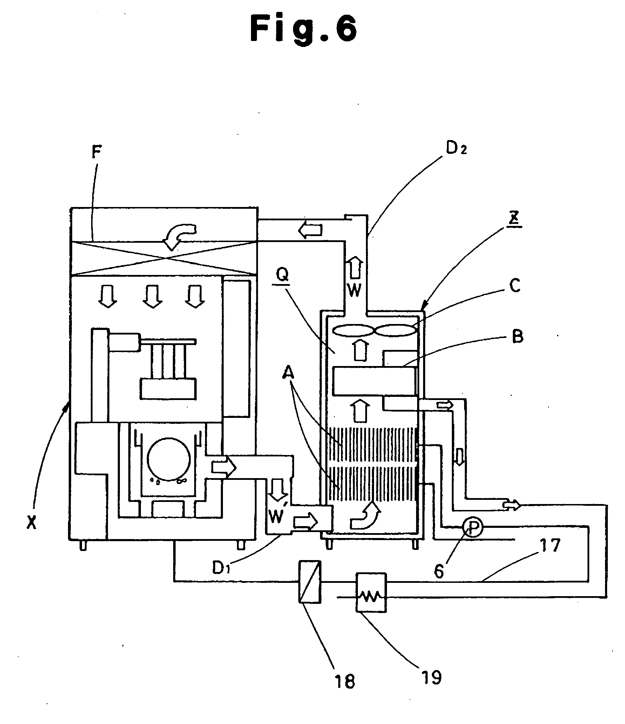

The second embodiment will now be discussed with reference to Fig. 6.

In the present embodiment, a water passage 17 supplies cleaning water waste from the cleaning device X to the tank 1 of the purification unit A. A reverse osmosis film module 18 and a mechanism 19 for vaporizing the concentrated water produced by the module 18 with the regenerated discharged air elimination device B are arranged in the water passage 17. This enables the cleaning water waste of the cleaning device X to be used as the pure water contained in the tank 1 of the purification unit A so that resources are efficiently used.

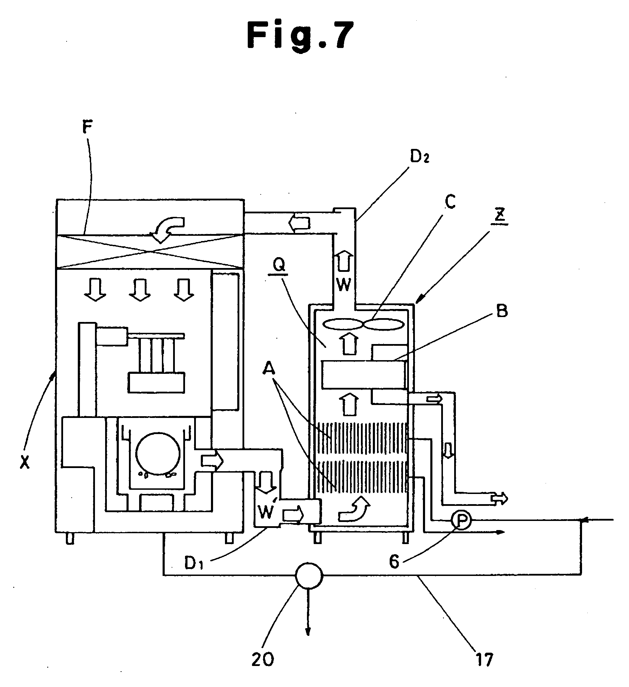

The third embodiment will now be described with reference to Fig. 7.

In the present embodiment, a water passage 17 supplies cleaning water waste from the cleaning device X to the tank 1 of the purification unit A in the same manner as in the second embodiment. A three-way valve 20 is arranged in the water passage 17 so that the water passage 17 is connected to the tank 1 only when the cleaning device X performs final cleaning. With such a structure, only the final cleaning water waste (i.e., rinsing water) of the cleaning device X is stored in the tank 1 of the purification unit A. Thus, resources are efficiently used.

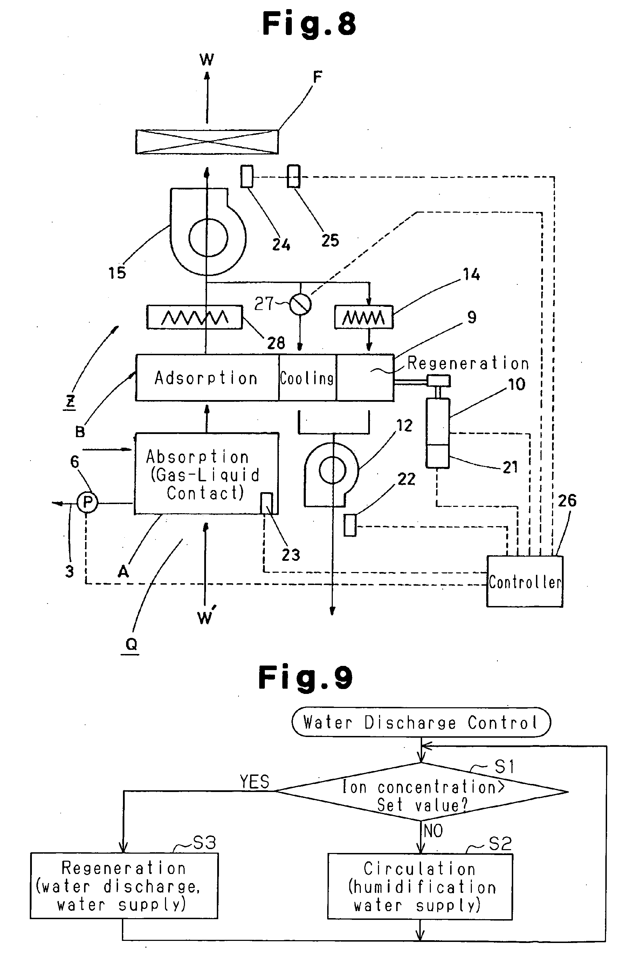

The fourth embodiment will now be discussed with reference to Figs. 8 to 12.

In the present embodiment, the rotation angle (or rotation speed) of the honeycomb rotor 9 is detected by a rotation angle sensor (or speed sensor) 21, which is arranged on an output shaft of the motor 10 in the elimination device B. The organic substance concentration of the regenerated discharged air of the honeycomb rotor 9 is detected by an organic substance concentration sensor 22. The ion concentration of the pure water in the purification unit A is detected by an ion concentration sensor 23. The temperature of the purified air W is detected by a temperature sensor 24, and the humidity of the purified air W is detected by a humidity sensor 25. A controller 26 performs a predetermined calculation process based on the values detected by the sensors 21 to 25. Based on the calculation result, the controller 26 drives and controls the pump 6 in the circulation passage 3 of the purification unit A, the motor 10 of the elimination device B, and a damper 27 for supplying cooling air to the cooling position P₃ in the elimination device B. Reference character 28 denotes a reheater for reheating the purified air W at the exit side of the elimination device B.

A reference value 1 and a lower reference value 2 are set for the organic substance concentration of the regenerated discharged air. The reference value 1 is a critical value at which the organic substance concentration in the regenerated discharged air exceeds the tolerable range such that organic substances must be positively eliminated. When the detection value of the organic substance concentration sensor 22 exceeds the reference value 1, the controller 26 rotates the motor 10, or the honeycomb rotor 9, at a higher speed. After further enhancing the adsorption of organic substances in the regenerated discharged air, the regeneration process or cooling process is performed.

When using the regenerated discharged air for the regeneration process or the cooling process, the reference value 2 is a value in which the organic substance concentration does not cause any interferences. If the detection value of the organic substance concentration sensor 22 does not reach the reference value 2, the controller 26 lowers the rotation speed of the motor 10, or the honeycomb rotor 9, by operating the motor 10 in a save energy mode and proceeds to the regeneration process or cooling process.

When the detection value of the organic substance concentration sensor 22 is between the reference value 1 and the reference value 2, the honeycomb rotor 9 proceeds to the regeneration process or the cooling process while maintaining its rotation speed. The controller 26 executes a water discharge control in accordance with the flowchart of Fig. 9.

In step S1, the detection value of the ion concentration sensor 23 and a set value are compared. When the determination of ion concentration ≤ set value is made in step S1, the pure water in the tank 1 is circulated through the circulation passage 3 in step S2. In step S1, when the determination of ion concentration > set value is made, in step S3, the used pure water is discharged from the water discharging passage 5, new pure water is supplied from the water supplying passage 4, and regeneration of the pure water is performed. In other words, the circulation amount of the pure water and the amount of supplied and discharged water are controlled based on the detection value of the ion concentration sensor 23. As a result, pure water is recycled and water supplying and discharging control is executed in accordance with the accumulation of contaminants in the pure water.

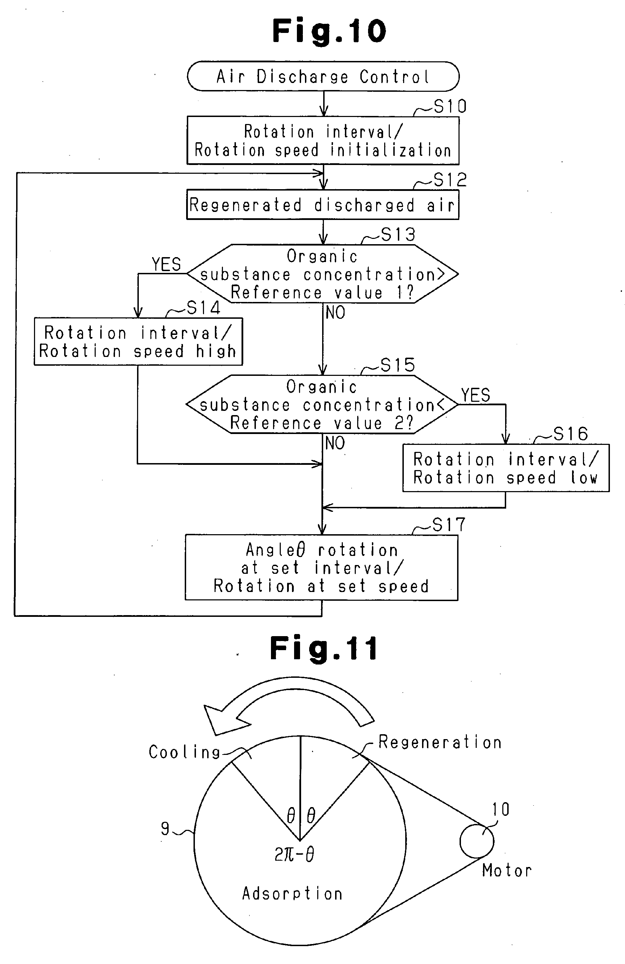

The controller 26 executes an air discharge control in accordance with the flowchart of Fig. 10.

In step S10, a rotation interval (or rotation speed) of the honeycomb rotor 9 is initialized based on the detection value of the rotation angle sensor (rotation speed sensor) 21. In step S12, the discharging of regenerated discharged air is started. Afterwards, in step S13, the detection value of the organic substance concentration sensor 22 is compared with the reference value 1. If the determination of the detection value > reference value 1 is made, in step S14, the rotation interval of the honeycomb rotor 9 is decreased or the rotation speed is increased. Then, in step S17, after the honeycomb rotor 9 is rotated by angle θ in the set interval or rotated in the set speed, the processing returns to step S12. As shown in Fig. 11, the angle θ is the angle of the honeycomb rotor 9 at the regeneration position P₂ and the cooling position P₃.

In step S13, when the determination of the detection value ≤ reference value 1 is made, in step S15, comparison between the detection value and the reference value 2 is performed. When the determination of the detection value < reference value 2 is made, in step S16, the rotation interval of the honeycomb rotor 9 is increased or the rotation speed is decreased. Then, the processing proceeds to step S17.

In step S15, when the determination of the detection value ≥ reference value 2 is made, the processing proceeds to step S17. Here, reference value 1 > reference value 2 is satisfied.

In other words, when the organic substance concentration is between the reference value 1 and the reference value 2, the honeycomb rotor 9 is rotated and driven in the set rotation interval or the rotation angle. However, when the organic substance concentration is greater than the reference value 1 or less than the reference value 2, the honeycomb rotor 9 is rotated and driven in the rotation interval or rotation speed corresponding to that state. In this manner, in the present embodiment, the rotation speed of the honeycomb rotor 9 is controlled based on the detection value of the rotation angle sensor (or speed sensor) 21. Accordingly, the adsorption of contaminants and the separation of contaminants are efficiently performed by the honeycomb rotor 9.

The rotation interval or rotation speed of the honeycomb rotor 9 is controlled based on the detection value of the organic substance concentration sensor 22. Thus, regeneration of the honeycomb rotor 9 is performed in accordance with the accumulation of contaminants in the honeycomb rotor 9. This saves further energy.

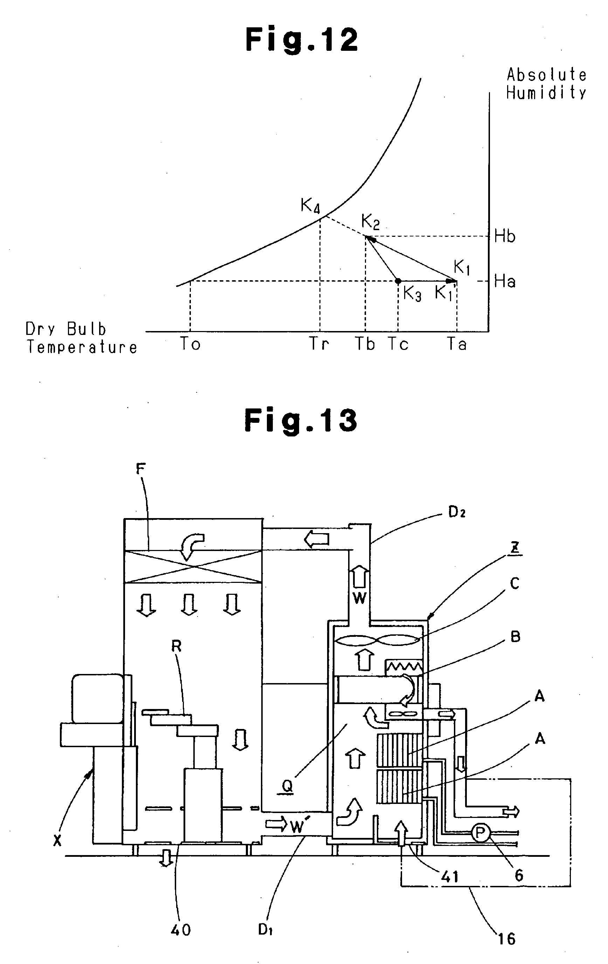

Control for keeping the temperature and humidity of the purified air W constant will now be discussed with reference to Fig. 12.

State K₁ of the air passing the purification unit A indicates a constant dry bulb temperature status change (i.e., change towards state K₄) in an approximating manner and shifts to state K₂ immediately before the air passes the honeycomb rotor 9. The adsorption reaction (adsorption of water and chemical substances) in the honeycomb rotor 9 slightly increases the temperature (Tb → Tc) and slightly decreases the humidity (Hb → Ha). Further, the heat of the regeneration heater 14 increases sensible heat (Tc → Ta) and causes a shift to state K₁'. That is, the water temperature of the purification unit A is controlled between the dew point temperature To and wet bulb temperature Tr of the air in state K₁ so as to cancel the humidity decrease (Hb → Ha) in the honeycomb rotor 9, and the cooling air amount of the damper 27 is controlled with the damper 27 so as to obtain the difference (Ta - Tc) between the cooling of the purification unit A and the adsorption heating of the honeycomb rotor 9 (in some cases, cooling is not performed and heating is further performed with the reheater 28). This enables state K₁ to be the same as state K₁'. By appropriately changing these control amounts, the temperature and humidity of the purified air W may be controlled in any manner.

In the present embodiment, an air amount control mechanism is provided to control the air amount of the cooling air that cools the honeycomb rotor 9. This enables temperature and humidity adjustment of the obtained purified air W.

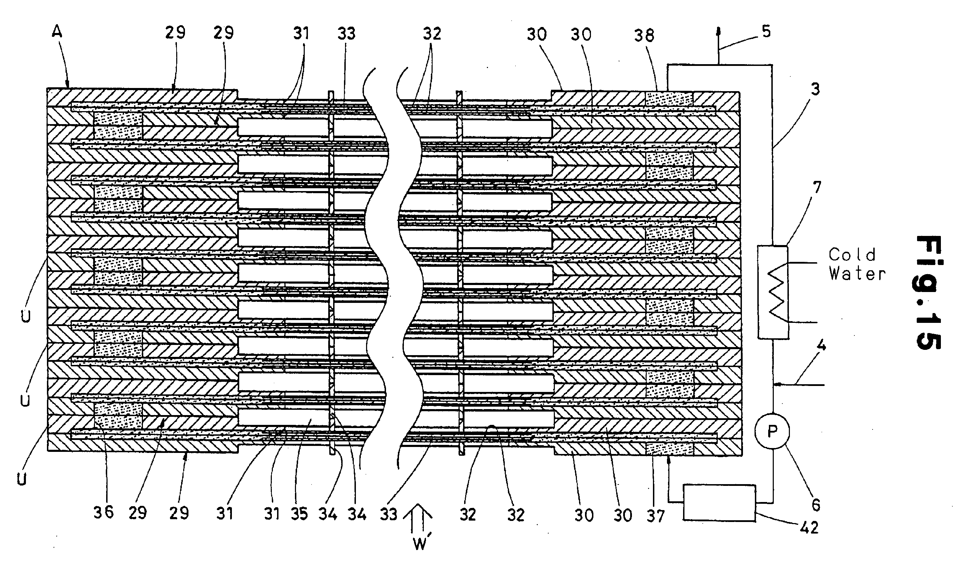

The fifth embodiment will now be discussed with reference to Figs. 13 and 15.

In the present embodiment, a wafer transporter, which includes a transportation robot R for transporting semiconductor wafers, is employed as the device W to which the purifier Z is added. The wafer transporter X has a bottom portion in which a discharge port 40 is formed to discharge some of the contaminated non-purified air W' from the interior of the transporter X.

The purifier Z includes an air passage Q through which air circulates between the duct D₁ and the duct D₂. The adsorption elimination device B and the purification unit A are arranged in the air passage Q. The adsorption elimination device B includes a regenerable adsorbent 9 for adsorbing contaminants from the non-purified air W' and separating the adsorbed contaminants through a regeneration process. The purification unit A is arranged upstream to and in series with the device B to separate and eliminate contaminants from the non-purified air into a liquid with a porous film.

In the present embodiment, the purification unit A is formed to enable passage of some (for example, about half) of the air circulating through the air passage Q. Accordingly, temperature and humidity adjustment is easily performed by suppressing excessive humidification in the purification unit A. Reference character 41 denotes an air supply port formed in the bottom portion of the purifier Z, and C denotes a fan for forcibly moving the purified air W.

As shown by the hypothetical line in Fig. 13, a passage 16 for returning some or all of the regenerated discharged air to the air supply port 41 etc. may be provided to avoid discharge of the purified air and save energy.

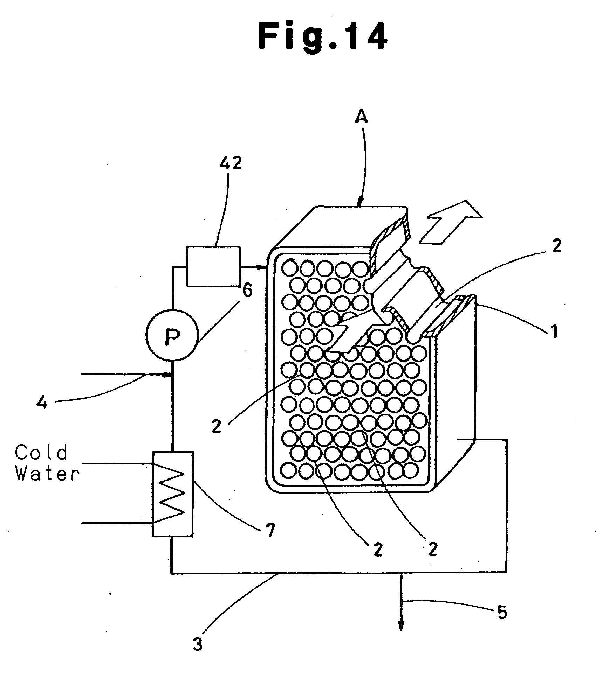

The purification unit A of the present embodiment is obtained by adding slight changes to the purification unit of the first embodiment. More specifically, as shown in Figs. 14 and 15, a water regeneration mechanism 42, which regenerates circulating water and which is formed by an ultraviolet lamp or a reverse osmosis film, is arranged in the circulation passage 3 of the pure water. This does not discharge the pure water and enables circulated use of the pure water. Thus, energy is effectively used.

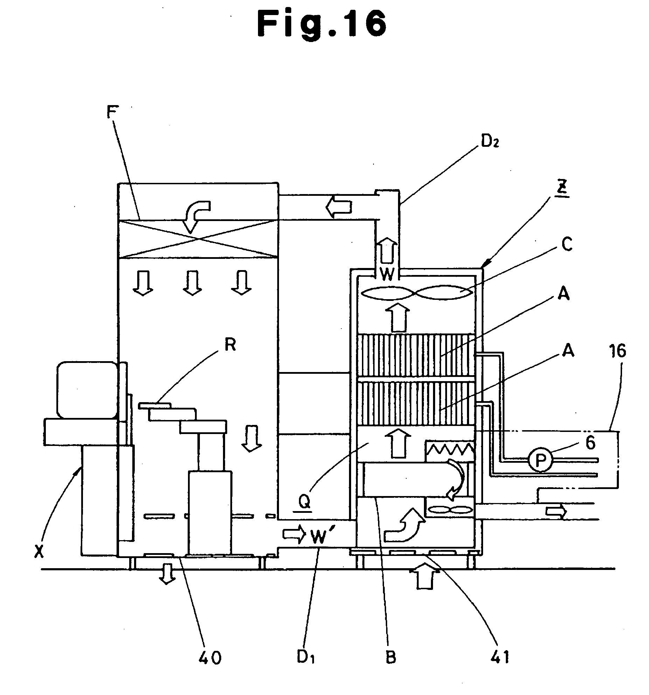

The sixth embodiment will now be described with reference to Fig. 16.

In the present embodiment, changes are made to the purifier Z of the fifth embodiment. More specifically, in the air passage Q, the gas purification unit A is arranged downstream to the adsorption elimination device (B) and in series with the adsorption elimination device. This processes the externally derived water-soluble gases included in the supplied air, such as NOx, Sox, and ammonia, with the upstream purification unit A. Accordingly, compact and efficient contaminant elimination is enabled. The purification unit A may be formed to enable passage of only the supplied air. Alternatively, the purification unit A may be formed to enable passage of both the supplied air and the circulating air.

The above structure obtains the same advantages as the above embodiment.

Further, the elimination device B efficiently adsorbs polar substances (e.g., organic contaminants) depending on the composition of the adsorbent 9. However, when the humidity of the processed air is high, moisture may be adsorbed first thereby lowering the adsorption elimination efficiency. However, in the present embodiment, the purification unit A is arranged at the downstream side of the elimination device B to perform gas-liquid contact with the porous films. Therefore, especially when eliminating polar organic contaminants at a high efficiency, the humidification function of the purification unit does not affect the elimination efficiency of the elimination device.

In the same manner as the fifth embodiment, a passage 16 for returning some or all of the regenerated discharged air to the purification unit A may be provided to avoid discharge of the purified air and save energy.

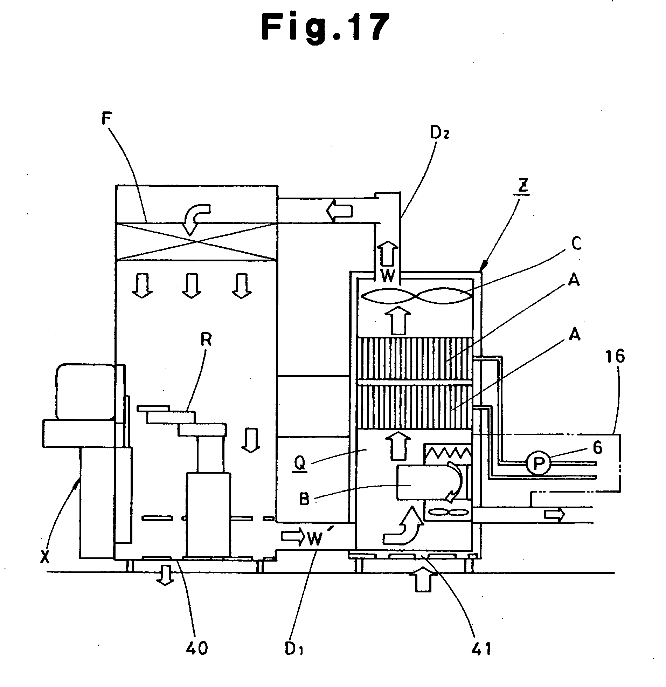

The seventh embodiment will now be described with reference to Fig. 17.

The present embodiment is obtained by changing part of the sixth embodiment. More specifically, the adsorption elimination device B is formed to enable passage of some (for example, about half) of the air circulated through the air passage Q of the adsorption elimination device B.

Some of the air circulating through the passage Q passes through the elimination device B as described above. This is effective when the organic contaminants in the composition of the contaminants included in the non-purified air W' are less than water-soluble gas.

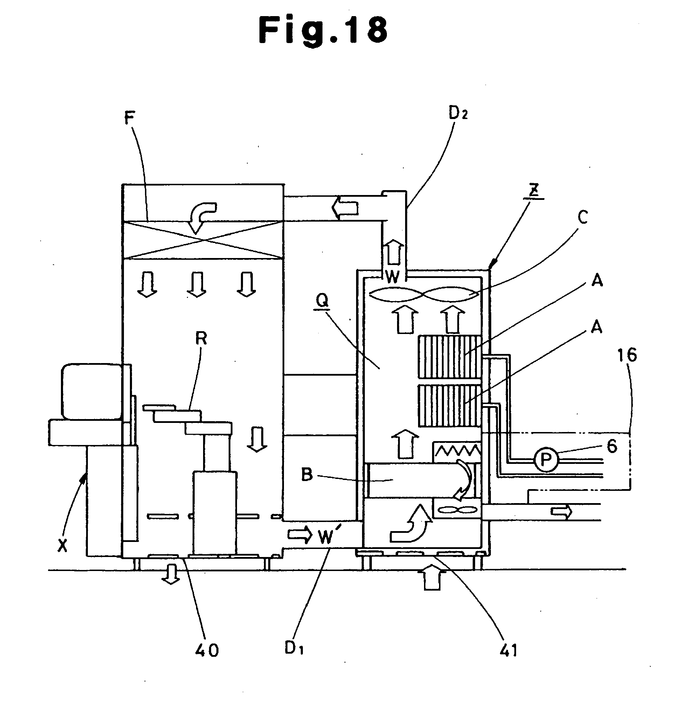

The eighth embodiment will now be discussed with reference to Fig. 18.

In the present embodiment, the adsorption elimination device B is formed to enable passage of some (for example, about half) of the air circulated through the air passage Q of the adsorption elimination device B. Accordingly, in the same manner as the fifth embodiment, excessive humidification in the purification unit A is suppressed. This facilitates temperature and humidity adjustment.

Further, in the present embodiment, the purification unit A is arranged at the downstream side of the elimination device B. Thus, the same advantages as the sixth embodiment are obtained.

Embodiments of the present invention have been described above. However, the present invention is not limited to the above embodiments and may be changed as described below.

In the above embodiments, the device X to which the gas purifier Z is added is a cleaning device or a wafer transporter. However, the device X is not limited in such a manner and may by a substrate processing device, such as a photoresist application exposure device or a mini-environment (EFEM).

## Claims

1. A gas purifier for purifying gas including contaminants, the gas purifier being **characterized by**:
an adsorption elimination device (B), which includes a regenerable adsorbent (9) for adsorbing contaminants from non-purified air (W') and separates the adsorbed contaminants through a regeneration process, and a gas purification unit (A), which performs gas-liquid contact with a porous film to separate and eliminate contaminants from the non-purified air (W') into a liquid, are arranged in an air passage (Q).

2. The gas purifier according to claim 1, being **characterized in that**:
the gas purification unit (A) is arranged upstream to the adsorption elimination device (B) and arranged in series with the adsorption elimination device.

3. The gas purifier according to claim 1, being **characterized in that**:
the gas purification unit (A) is arranged downstream to the adsorption elimination device (B) and arranged in series with the adsorption elimination device.

4. The gas purifier according to any one of claims 1 to 3, being **characterized in that**:
the gas purification unit (A) is formed to enable passage of some air circulating through the air passage (Q).

5. The gas purifier according to claim 3, **characterized in that** the adsorption elimination device (B) is formed to enable passage of some air circulating through the air passage (Q).

6. The gas purifier according to any one of claims 1 to 5, being **characterized in that**:
the adsorption elimination device (B) includes a moving means for moving the adsorbent (9) to a purification position (P₁) at which the non-purified air (W') is purified and a regeneration position (P₂) at which the adsorbed contaminants are separated, and a regenerating means for separating contaminants from the adsorbent (9) at the regeneration position (P₂).

7. The gas purifier according to claim 6, being **characterized in that**:
the adsorbent is formed by a honeycomb rotor made of a hydrophobic zeolite, and the moving means is formed by a motor (10) for rotating and driving the honeycomb rotor (9).

8. The gas purifier according to any one of claims 1 to 7, being **characterized in that**:
the adsorbent (9) uses some of purified air (W) obtained by passage through the adsorbent as air for the regeneration process, and a passage (16) returns some or all of regenerated discharged air obtained through the regeneration process to an air supply portion of the gas purification unit.

9. The gas purifier according to claim 7 or 8, being **characterized by**:
an air amount control mechanism for controlling the air amount of cooling air for cooling the honeycomb rotor (9).

10. The gas purifier according to any one of claims 7 to 9, being **characterized by**:
a sensor (21) for detecting a rotation angle or a rotation speed of the honeycomb rotor (9), wherein the rotation speed of the honeycomb rotor (9) is controlled based on a detection value of the sensor (21).

11. The gas purifier according to claim 10, being **characterized by**:
an organic substance concentration sensor (22) for detecting the organic substance concentration in the regenerated discharged air of the honeycomb rotor (9), wherein the rotation speed of the honeycomb rotor (9) is controlled based on a detection value of the organic substance concentration sensor (22).

12. The gas purifier according to any one of claims 1 to 11, being **characterized in that**:
the gas purification unit (A) includes a tank (1) containing pure water and a plurality of pipes (2) of porous films extending in the tank (1).

13. The gas purifier according to any one of claims 1 to 11, being **characterized in that**:
the gas purification unit (A) is formed by stacking film elements (29) of porous films, wherein pure water contacts the non-purified air (W') through the film elements (29).

14. The gas purifier according to claim 12 or 13, being **characterized by**:
a temperature control mechanism (7) for controlling the temperature of the pure water.

15. The gas purifier according to any one of claims 12 to 14, being **characterized by**:
a water regeneration mechanism (42) for regenerating water circulating through the gas purification unit (A).

16. The gas purifier according to any one of claims 12 to 15, being **characterized in that**:
discharged water of a device (X), which is supplied with the purified air (W) obtained by the gas purifier, is used as the pure water.

17. The gas purifier according to any one of claims 12 to 16, being **characterized by**:
a pure water circulating means (3) for circulating the pure water;
a pure water supplying means (4) for supplying the pure water circulating means (3) with new pure water;
a pure water discharging means (5) for discharging used pure water from the pure water circulating means (3); and
an ion concentration sensor for detecting the ion concentration in the pure water, wherein the circulation amount and the supplied and discharged amount of the pure water is controlled based on a detection value of the ion concentration sensor (23).
